# EUROPÄISCHE PATENTSCHRIFT

(11) **EP 1 967 806 B1**
(45) Veröffentlichungstag und Bekanntmachung des Hinweises auf die Patenterteilung: **28.04.2010**
(21) Anmeldenummer: 08151718.7
(22) Anmeldetag: 21.02.2008
(51) Int. Cl.: F28D 7/08, F28D 7/16, B01F 15/06

(54) **Vorrichtung zur wärmetauschenden und mischenden Behandlung von fluiden Medien**
Device for heat exchange and mixing treatment of fluid mediums
Dispositif destiné au traitement par échange thermique et mélange de fluides

(30) Priorität: 09.03.2007 EP 07103866
(43) Veröffentlichungstag der Anmeldung: 10.09.2008
(73) Patentinhaber: Sulzer Chemtech AG, 8404 Winterthur (CH)
(72) Erfinder: Mathys, Peter, 8212 Neuhausen (CH); Lanfranchi, Sarah, 8005 Zürich (CH)
(74) Vertreter: Sulzer Management AG

(56) Entgegenhaltungen:
- EP-A2- 1 123 730
- DE-A1- 2 839 564
- DE-A1- 3 212 727
- US-A1- 2004 125 691

## Beschreibung

Die Erfindung betrifft eine Vorrichtung zur wärmetauschenden und mischenden Behandlung von fluiden Medien, insbesondere von niederviskosen, wie auch hochviskosen Fluiden. Die Vorrichtung erfüllt eine Wärmetausch- und Mischfunktion, wobei ein erstes und zumindest ein weiteres Fluid durch die Vorrichtung strömen. Zwischen dem ersten Fluid, dem Wärmeträgerfluid, und zumindest einem weiteren Fluid erfolgt ein Wärmeaustausch in der Vorrichtung. Gleichzeitig sind Mittel vorgesehen, um das weitere Fluid in der Vorrichtung während des Wärmetausches zu durchmischen. In einer Vorrichtung gemäss Oberbegriff von Anspruch 1 wird ein Wärmetausch sowie eine Durchmischung des oder der weiteren Fluiden durchgeführt. Zusätzlich kann die Vorrichtung als Reaktor ausgebildet sein, in welchem eine chemische Reaktion abläuft.

Eine Vorrichtung, zur wärmetauschenden und mischenden Behandlung von niederviskosen, wie auch hochviskosen Medien ist aus der DE 28 39 564 bekannt.

Aufgabe der Erfindung ist es, zur genannten Vorrichtung eine Verbesserung zu schaffen, mit der die Homogenität der Mischung erhöht werden kann, wobei sich die Vorrichtung insbesondere zur Verarbeitung von hochviskosen Fluiden eignet. Es soll ausserdem eine bessere Durchmischung des Fluids erfolgen.

Diese Aufgabe wird durch die Vorrichtung zur wärmetauschenden und mischenden Behandlung von fluiden Medien gelöst. Die Vorrichtung umfasst ein Gehäuse mit darin angeordneten Einbauten. Die Einbauten umfassen eine erste Hohlstruktur und eine zweite Hohlstruktur. Die erste Hohlstruktur und die zweite Hohlstruktur sind von einem ersten Fluid durchströmbar und von einem zweiten Fluid umströmbar. Die erste Hohlstruktur und die zweite Hohlstruktur sind kreuzweise zueinander angeordnet. Die Hohlstrukturen weisen einen Strömungsquerschnitt mit einer ersten Breite B1 und einer zweiten Breite B2 auf, wobei B1/B2 grösser eins ist und B1 normal zu einer Ebene gerichtet ist, welche die Längsachse des Gehäuses oder eine zu dieser Längsachse parallele Linie und eine Achse der Hohlstruktur enthält. Als Folge des Einsatzes von Hohlstrukturen zur Homogenisierung des Fluids ist somit eine bessere Verweilzeitverteilung erzielbar. Die Vorrichtung arbeitet als Mischer oder Wärmetauscher oder als kombinierter Wärmetausch-Reaktor. Die Hohlstrukturen umfassen nach einem bevorzugten Ausführungsbeispiel eine Mehrzahl von Verbindungselementen, durch welche eine Zwangsumlenkung des im Inneren der Hohlstruktur strömenden ersten Fluids bewirkt wird. Nach einem weiteren Ausführungsbeispiel wird das Gehäuse von einem inneren und einem äusseren Wandkörper gebildet, die einen Doppelmantel ausbilden, welches von einem ersten Fluid durchströmbar ist. Im Inneren des inneren Wandkörpers erstrecken sich Hohlstrukturen, die kreuzweise angeordnet sind und in welche Teilströme des ersten Fluids eingeleitet werden, sodass diese Hohlstrukturen vom ersten Fluid durchströmt werden. Ein zweites Fluid umströmt die Hohlstrukturen und es erfolgt ein Wärmeaustausch zwischen den beiden Fluiden durch die Hohlstrukturen und durch die Doppelrohrwand.

Gemäss des ersten Ausführungsbeispiels, nach welchem die Hohlstrukturen Verbindungselemente aufweisen, durchströmt das zweite Fluid einen Eintrittsquerschnitt des Gehäuses entlang einer Hauptströmungsrichtung, die entlang der Längsachse des Gehäuses liegt. Die erste Hohlstruktur umfasst einen ersten Abschnitt, der sich parallel zur Längsachse erstreckt, und weist eine Mehrzahl von Verbindungselementen auf, in welchen eine Zwangsumlenkung des im Inneren der Hohlstruktur strömenden ersten Fluids erfolgt. Zwischen einem ersten Verbindungselement und einem zweiten Verbindungselement ist ein zweiter Abschnitt angeordnet, in welchem die mittlere Strömungsrichtung des ersten Fluids gegenüber der Längsachse zumindest abschnittsweise in einem Winkel alpha verläuft. Der Winkel alpha ist zwischen der Hauptströmungsrichtung und der gemeinsamen Tangente an die Achse des ersten und des zweiten Verbindungselements aufgespannt. Eine zweite Hohlstruktur ist benachbart zur ersten Hohlstruktur angeordnet und umfasst ebenfalls Abschnitte, die durch Verbindungselemente verbunden sind, in welchen die mittlere Strömungsrichtung des ersten Fluids gegenüber der Längsachse zumindest abschnittsweise in einem Winkel beta verläuft. Die Winkel alpha und beta unterscheiden sich in ihrem Vorzeichen und/oder ihrem Betrag. Die ersten und die zweiten Hohlstrukturen sind nach einem bevorzugten Ausführungsbeispiel im Wesentlichen symmetrisch zueinander, insbesondere kreuzweise angeordnet. Nach einem bevorzugten Ausführungsbeispiel sind die Winkel alpha und beta gleich, aber weisen entgegengesetzte Vorzeichen auf. Die ersten und zweiten Verbindungselemente sind im Wesentlichen halbkreisförmig ausgestaltet. Die Abschnitte einer Hohlstruktur weisen somit eine parallele Anordnung auf. Nach einem weiteren Ausführungsbeispiel sind die ersten und zweiten Verbindungselemente v-förmig oder u-förmig ausgestaltet.

Nach einem bevorzugten Ausführungsbeispiel besteht eine Hohlstruktur aus einem oder einer Mehrzahl von Hohlkörpern in paralleler Anordnung zueinander. Die Einbauten werden aus minimal 4 und maximal 12 Hohlstrukturen gebildet. Durch die 4 bis 12 Hohlstrukturen erfolgt eine innige Durchmischung des zweiten Fluids entlang der Wegstrecke.

Die erste Hohlstruktur und/oder die zweite Hohlstruktur sind als ein Bündel von im Wesentlichen parallel verlaufenden Rohren ausgebildet, wobei die Rohre eines Bündels leicht versetzt zueinander stehen können und/oder zwischen den Rohren eines Bündels ein definierter Spalt vorgesehen ist. Dieser Spalt ist somit so schmal, dass nur ein kleiner Anteil des zweiten Fluids durch diesen fliesst.

Die Hohlstrukturen weisen eine erste Oberfläche auf, auf welche das zweite Fluid auftrifft und zumindest zwei Teilströme bildet, einen ersten Teilstrom, der entlang der Oberfläche geführt wird, sowie einen zweiten Teilstrom, der die Oberfläche verlässt und in ein oder mehrere Fluidvolumen geleitet wird. Das Fluidvolumen ist als prismatischer Körper ausgebildet, welcher 6 viereckige Flächen aufweist, die von den Rändern der ersten, zweiten und einer dritten Hohlstruktur gebildet werden, sodass eine Grundfläche und eine Deckfläche, sowie eine erste und eine zweite Seitenfläche offen sind und die übrigen Seitenflächen aus Teilen der ersten Oberfläche und einer zweiten Oberfläche gebildet werden, sodass die Grundfläche, Deckfläche und die erste und zweite Seitenfläche vom zweiten Fluid durchströmbar sind. Hierdurch erfolgt eine kontinuierliche Teilung und Vereinigung von Teilströmen, wodurch eine Umlagerung und Durchmischung des zweiten Fluids erfolgt.

Optional kann ein Sammelelement an einem zweiten Ende des Gehäuses angebracht sein oder zwei Hohlstrukturen oder zwei einzelne Hohlkörper einer Hohlstruktur können an einem zweiten Ende des Gehäuses miteinander verbunden sein. In das Sammelelement mündet ein Teil der Hohlstrukturen, sodass das erste Fluid nach Durchströmen der Hohlstrukturen in dem Sammelelement aufgenommen wird. Ein Teil der Hohlstrukturen ist vom Sammelelement ausgehend mit erstem Fluid beschickbar, sodass dem Sammelelement zumindest abschnittsweise die Funktion eines Verteilelements zukommt. Optional kann ein Sammelelement an einem ersten Ende des Gehäuses angebracht sein, oder zwei Hohlstrukturen oder zwei einzelne Hohlkörper einer Hohlstruktur können an einem ersten Ende des Gehäuses miteinander verbunden sein.

Das erste und das zweite Fluid können dementsprechend sowohl im Gegenstrom oder im Kreuz-Gegenstrom, als auch im Gleichstrom oder im Kreuz-Gleichstrom zueinander geführt werden.

Das zweite Fluid kann Komponenten umfassen, zwischen denen eine chemische Reaktion abläuft. Zwischen zwei benachbarten Hohlstrukturen ist ein Abstand vorgesehen, wenn die Umlagerung und Durchmischung der Komponenten dadurch verbessert wird und/oder die Anwendung eine reduzierte Oberfläche für den Wärmeaustausch bezogen auf das Apparatevolumen erfordert.

Ein Verfahren zur wärmetauschenden und mischenden Behandlung von fluiden Medien wird in einer Vorrichtung durchgeführt, die ein Gehäuse mit darin angeordneten Einbauten umfasst, wobei die Einbauten eine erste Hohlstruktur und eine zweite Hohlstruktur ausbilden. In einem ersten Schritt wird die erste Hohlstruktur und die zweite Hohlstruktur von einem ersten Fluid durchströmt und von einem zweiten Fluid umströmt, wobei die erste Hohlstruktur und die zweite Hohlstruktur kreuzweise zueinander angeordnet sind. Das zweite Fluid wird durch die Hohlstrukturen umgelenkt, weil die Hohlstrukturen einen Strömungsquerschnitt mit einer ersten Breite B1 und einer zweiten Breite B2 aufweisen, wobei B1/B2 grösser eins ist, und B1 normal zu einer Ebene gerichtet ist, welche die Längsachse des Gehäuses oder eine zu dieser Längsachse parallele Linie und eine Achse der Hohlstruktur enthält, sodass sich das Fluid durchmischt, während es die Hohlstrukturen umströmt.

Die Vorrichtung findet Verwendung zur wärmetauschenden und mischenden Behandlung von hochviskosen Fluiden, insbesondere Polymeren oder Nahrungsmitteln.

Nachfolgend wird die Erfindung anhand der Zeichnungen erläutert.
- Fig. 1: zeigt eine Ansicht der Vorrichtung gemäss eines ersten Ausführungsbeispiels
- Fig. 2: zeigt eine Ansicht der Vorrichtung gemäss eines zweiten Ausführungsbeispiels
- Fig. 3: zeigt einen Längsschnitt durch eine Vorrichtung gemäss des ersten Ausführungsbeispiels
- Fig. 4: zeigt einen weiteren Längsschnitt durch die Vorrichtung gemäss Fig. 3 in einer Schnittebene, die normal zur Schnittebene der Fig. 3 angeordnet ist
- Fig. 5: zeigt einen Schnitt durch die Vorrichtung nach Fig. 3, der in einer Ebene normal zur Längsachse der Vorrichtung angeordnet ist.
- Fig. 6: zeigt eine Darstellung der fortschreitenden Vermischung von einem aus zwei Komponenten bestehenden zweiten Fluid entlang der Längsachse der Vorrichtung.
- Fig. 7: zeigt eine schematische Ansicht der Vorrichtung zur Erläuterung der Mischwirkung der Einbauten.
- Fig. 8: zeigt ein Detail der Fig. 7 sowie eine Darstellung eines Fluidvolumens zur Erläuterung der Strömung.
- Fig. 9: zeigt eine Ansicht eines ersten Ausführungsbeispiels mit v-förmigen Umlenkungen.
- Fig. 10: zeigt eine Ansicht einer Variante des Ausführungsbeispiels gemäss Fig. 9 mit v-förmigen Umlenkungen.
- Fig. 11: zeigt eine Ansicht der Vorrichtung gemäss eines dritten Ausführungsbeispiels.
- Fig. 12: zeigt zwei Schnitte durch die Vorrichtung gemäss des dritten Ausführungsbeispiels.

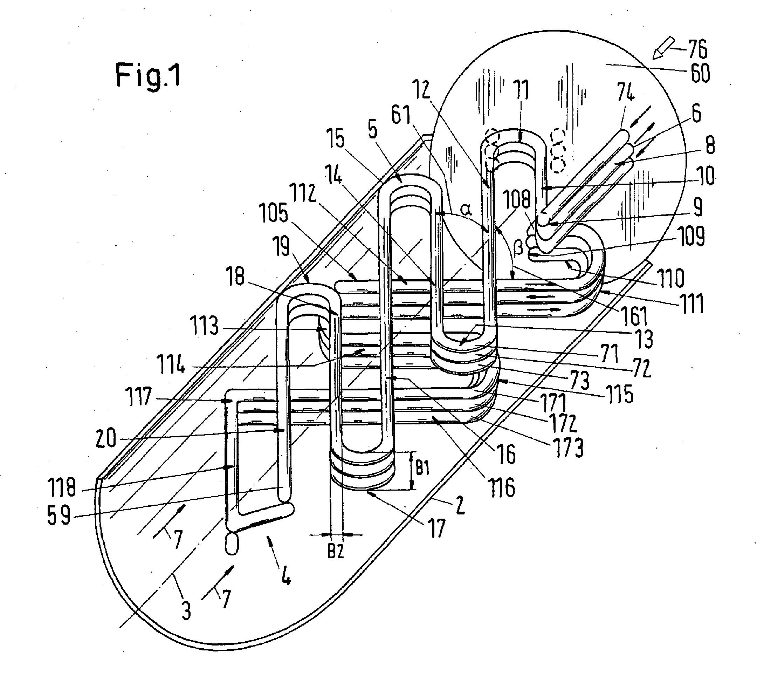

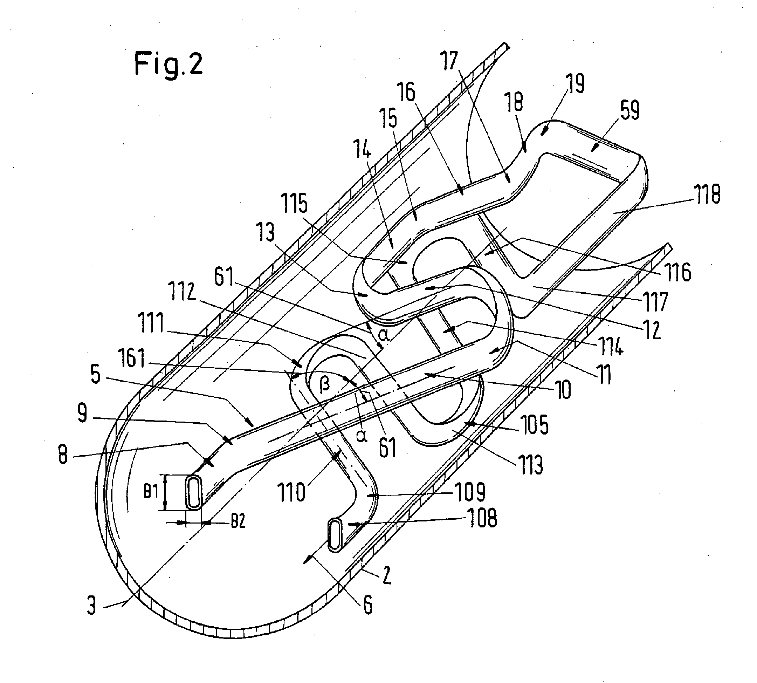

Mit einer erfindungsgemässen Vorrichtung nach dem ersten besonders bevorzugten Ausführungsbeispiel, wie in Fig. 1 dargestellt, wird eine Durchmischung von Fluiden unter Wärmeaustausch gezeigt. Die Vorrichtung umfasst ein Gehäuse 2, mit darin angeordneten Einbauten 4. Das Gehäuse 2 ist in der Fig. 1 teilweise aufgeschnitten, um dessen Innenraum sichtbar zu machen. Die Einbauten 4 umfassen eine erste Hohlstruktur 5, und eine zweite Hohlstruktur 105. Die erste Hohlstruktur 5 und die zweite Hohlstruktur 105 sind von einem ersten Fluid 6 durchströmbar und von einem zweiten Fluid 7 umströmbar in Richtung oder entgegengesetzt zur Hauptströmungsrichtung 76 je nach Bauart der Vorrichtung. Jede der Hohlstrukturen (5, 105) besteht aus einer Mehrzahl von nebeneinander angeordneten Hohlkörpern (71, 72, 73, 171, 172, 173), die im Wesentlichen zueinander parallel verlaufen und in ihrer Wirkung für die Strömung des zweiten Fluids 7 als ein einziges Strömungshindernis aufzufassen sind. In der Fig. 1 sind die Hohlkörper (71, 72, 73, 171, 172, 173) als Rohre mit kreisförmigem Querschnitt ausgebildet. Der Hohlkörper 71 ist an einem ersten Ende 74 in einen Boden 60 eingespannt, und erstreckt sich in den Innenraum des Gehäuses 2. Der Hohlkörper 71 endet in einem Umlenkelement 59 und mündet in den Hohlkörper 72, der parallel zum Hohlkörper 71 angeordnet ist und vom Umlenkelement 59 bis zum Boden 60 verläuft. Die Hohlkörper 71 und 72 führen somit das erste Fluid 6 in Form einer Schlaufe durch den Innenraum des Gehäuses 2. Durch den Hohlkörper 71 wird somit ein geschlossener Kanal für das erste Fluid 6 ausgebildet, welches durch den Hohlkörper 71 in entgegengesetzter Richtung zum Hohlkörper 72 strömt. Das Umlenkelement 59 kann alternativ auch in einem andern Hohlkörper (73, 171, 172, 173, oder weitere) münden und insbesondere auch eine längere Ausdehnung senkrecht zur Längsachse 3 aufweisen, was in Fig. 2 zeichnerisch dargestellt ist. Alternativ zu der Anordnung als Schlaufe können die Hohlkörper analog zur EP06118609 angeordnet sein, was in den Fig. nicht zeichnerisch dargestellt ist.

Der Boden 60 kann Kammern umfassen, in welche sich die Hohlkörper erstrecken oder in welche die Hohlkörper einmünden, und in welchen das erste Fluid 6 eingespeist und/oder abgezogen wird. Des weiteren kann der Boden 60 Öffnungen enthalten, durch welche das zweite Fluid 7 in das Gehäuse hineinströmt, oder das Gehäuse verlässt. Diese Öffnungen sind zeichnerisch nicht dargestellt.

Die erste Hohlstruktur 5 und die zweite Hohlstruktur 105 sind kreuzweise zueinander angeordnet. Die erste Hohlstruktur 5 umfasst einen ersten Abschnitt 8, der sich parallel zur Längsachse 3 erstreckt, und eine Mehrzahl von Verbindungselementen (9, 11, 13, 15, 17, 19), in welchen eine Zwangsumlenkung des im Inneren der ersten Hohlstruktur strömenden ersten Fluids 6 erfolgt. Zwischen einem ersten Verbindungselement 9 und einem zweiten Verbindungselement 11 ist ein zweiter Abschnitt 10 angeordnet, in welchem die mittlere Strömungsrichtung des ersten Fluids gegenüber der Längsachse 3 zumindest abschnittsweise in einem Winkel alpha 61 verläuft, der zwischen der Längsachse 3 und dem zweiten Abschnitt 10 oder dem parallel dazu verlaufenden dritten Abschnitt 12 aufgespannt ist. Handelt es sich bei dem zweiten Abschnitt 10 um keine Gerade, sondern um ein beliebig geformtes Kurvenstück, werden die beiden Endpunkte von benachbarten Verbindungselementen (9, 11) auf der Achse der ersten Hohlstruktur 5 miteinander verbunden. Der Winkel, der zwischen dieser gedachten Verbindungsgerade und der Längsachse 3 aufgespannt wird, entspricht dem Winkel alpha 61. Eine zweite Hohlstruktur 105 ist im Inneren des Gehäuses 2 angeordnet, die von dem ersten Fluid 6 durchströmbar und von dem zweiten Fluid 7 umströmbar ist. Die zweite Hohlstruktur 105 umfasst einen ersten Abschnitt 108, der sich parallel zur Längsachse 3 erstreckt, und eine Mehrzahl von Verbindungselementen (109, 111, 113, 115, 117), in welchen eine Zwangsumlenkung des im Inneren des Hohlkörpers 105 strömenden ersten Fluids 6 erfolgt. Zwischen einem ersten Verbindungselement 109 und einem zweiten Verbindungselement 111 ist ein zweiter Abschnitt 110 angeordnet, in welchem die Strömungsrichtung des ersten Fluids gegenüber der Längsachse 3 in einem Winkel beta 161 verläuft, der zwischen der Längsachse 3 und dem zweiten Abschnitt 110 oder dem parallel dazu verlaufenden dritten Abschnitt 112 aufgespannt ist. Für Abschnitte (110,112), die als beliebig geformtes Kurvenstück ausgebildet sind, gelten die Aussagen analog zur oben beschriebenen ersten Hohlstruktur. Für die Abschnitte (14, 16, 18, 20, 114, 116, 118) gelten die obigen Ausführungen in gleicher Weise. Die zweiten Abschnitte (10, 110) und die dritten Abschnitte (12, 112) benachbarter Hohlstrukturen (5, 105) sind daher gemäss Fig. 1 kreuzweise zueinander angeordnet. Für alle weiteren dargestellten Abschnitte gilt analoges. Die Winkel alpha 61 und beta 161 haben in dem Ausführungsbeispiel gemäss Fig. 1 im Wesentlichen den gleichen Betrag, aber entgegengesetzte Vorzeichen. Die Verbindungselemente (9, 11, 13, 15, 17, 19, 109, 111, 113, 115, 117) sind gemäss Fig. 1 halbkreisförmig ausgestaltet oder haben die Form eines Kreisbogens. Die Hohlstrukturen (5, 105) weisen in einer normal zur Achse eines Abschnitts einer Hohlstruktur angeordneten Schnittebene einen Strömungsquerschnitt mit einer ersten Breite B1 und einer zweiten Breite B2 auf, wobei B1/B2 grösser eins ist und B1 normal zu einer Ebene gerichtet ist, welche die Längsachse 3 des Gehäuses oder eine zu dieser Längsachse 3 parallele Linie und eine Achse der Hohlstruktur (5, 105) enthält. Hierbei ist mit der Breite B1 die Breite aller zur ersten Hohlstruktur 5 gehörigen Hohlkörper (71, 72, 73) oder aller zur zweiten Hohlstruktur 105 gehörigen Hohlkörper (171, 172, 173) gemeint. Die Breite B2 ist die Querschnittsabmessung eines Hohlkörpers der Hohlstruktur oder die kleinste Querschnittsabmessung der Hohlstruktur. Die Breite B1 ist die Querschnittsabmessung der Hohlstruktur, die senkrecht zu B2 angeordnet ist. Die Breite B1 der Hohlstruktur 5 und der Hohlstruktur 105 sind in diesem Ausführungsbeispiel identisch. Die zur Hohlstruktur 5 gehörigen Hohlkörper (71, 72, 73), sind im wesentlichen aneinander anliegend angeordnet, sodass eine Gruppe von Hohlkörpern (beispielsweise die Gruppe 71, 72, 73 oder die Gruppe 171, 172, 173) ein Hindernis für die Strömung des zweiten Fluids 7 darstellt. Alternativ dazu können die Hohlkörper einer Hohlstruktur auch zueinander leicht versetzt angeordnet sein. Zwischen den Hohlkörpern kann auch ein nicht dargestellter Spalt verbleiben. Durch diesen Spalt soll allenfalls ein kleiner Anteil des zweiten Fluids 7 strömen, der grössere Anteil des zweiten Fluids wird vor dem Auftreffen auf die Hohlkörper umgelenkt, sodass der grössere Anteil des zweiten Fluids die Hohlstruktur umströmt oder an dieser entlang strömt. Analoges gilt für die zur Hohlstruktur 105 gehörigen Hohlkörper (171, 172, 173). Desgleichen kann ein Abstand zwischen benachbarten Hohlstrukturen (5, 105) vorgesehen sein.

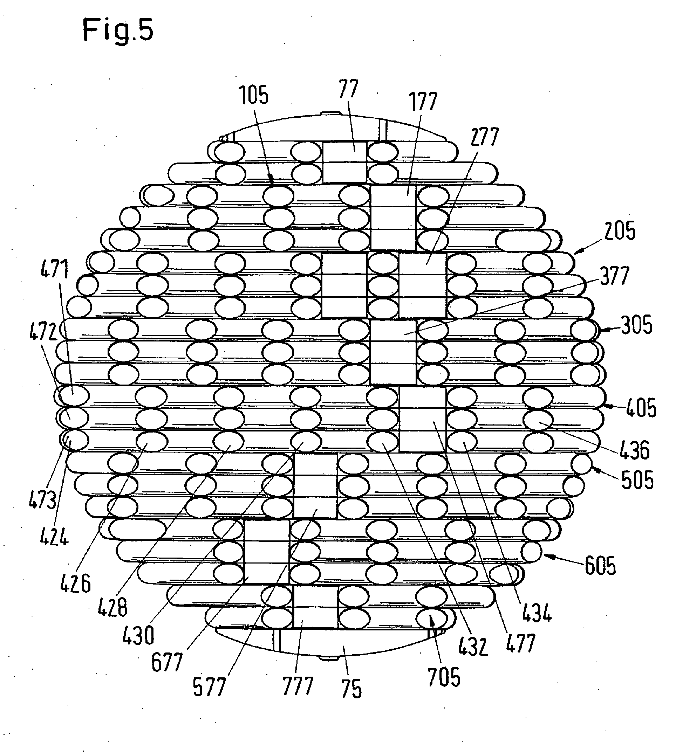

Insbesondere die Verbindungselemente der Hohlstrukturen (5, 105), die sich in der Nähe des Gehäuses 2 befinden, werden zur besseren Ausnützung des zur Verfügung stehenden Misch- und Wärmeübertragungsraums versetzt angeordnet, was in Fig. 1 nicht gezeigt ist. Das heisst, insbesondere die Verbindungselemente (9, 11, 13, 15, 17, 19) einer ersten Hohlstruktur 5 oder die Verbindungselemente (109, 111, 113, 115, 117) einer randnahen zweiten Hohlstruktur 105 sind gemäss Fig. 5 als zueinander versetzt angeordnete Rohrbogen ausgestaltet, da sie an die Form des Gehäuses 2 angepasst werden. Die Abstände zwischen den Rohrbogen und dem Gehäuse werden durch diese Versetzung minimiert.

Fig. 2 zeigt eine Ansicht der Vorrichtung gemäss einem zweiten Ausführungsbeispiel. In der Folge soll nur auf Merkmale verwiesen werden, die sich vom Ausführungsbeispiel gemäss Fig. 1 unterscheiden. Die erste Hohlstruktur 5 hat eine Breite B1 und Breite B2, wobei das Verhältnis von B1 zu B2 grösser als 1 ist, und bildet dadurch einen Strömungskanal im Inneren des Hohlkörpers mit einem im Wesentlichen ovalen Querschnitt aus, was in gleicher Weise für die zweite Hohlstruktur 105 gilt. Die Winkel alpha 61 und beta 161, welche in Zusammenhang mit Fig. 1 eingehend beschrieben worden sind, unterscheiden sich in ihrem Vorzeichen und/oder ihrem Betrag.

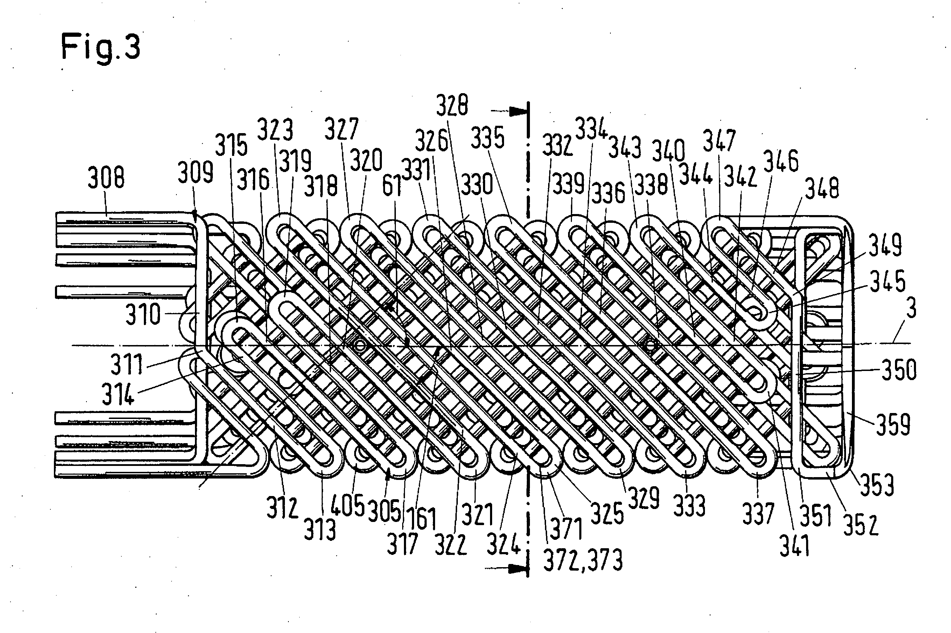

Fig. 3 zeigt einen Längsschnitt durch eine Vorrichtung gemäss des ersten Ausführungsbeispiels. In diesem Fall sind benachbarte Hohlkörper (371, 372, 373) aus der Sicht des Betrachters hintereinander angeordnet. Fig. 3 ist ein Schnitt längs einer die Längsachse 3 enthaltenden Schnittebene parallel zur Ebene, welche gemäss Fig. 1 die erste Hohlstruktur 5 enthält. Die Hohlstruktur 305 ist unter einem Winkel beta 161 zur Längsachse 3 angeordnet. Hinter der Hohlstruktur 305 ist die Hohlstruktur 405 teilweise sichtbar, die unter einem Winkel alpha 61 zur Längsachse angeordnet ist. In diesem speziellen Fall sind der Winkel alpha 61 und der Winkel beta 161 betragsmässig gleich und betragen ungefähr 45°. Im Unterschied zu Fig. 1 sind wesentlich mehr Verbindungselemente vorgesehen. Gemäss einer Variante können die Hohlstrukturen zumindest teilweise durch Strukturen ohne inneren Hohlraum oder mit einem inneren Hohlraum, der nicht von einem ersten Fluid durchströmt wird, ersetzt werden. Diese Varianten kommen insbesondere zum Einsatz, wenn die benötigte Wärmeaustauschfläche klein ist.

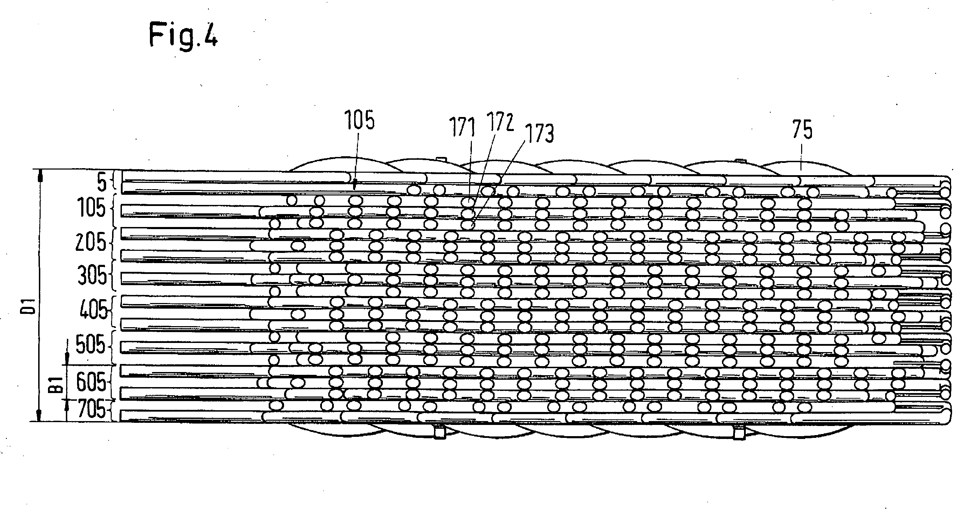

Fig. 4 zeigt einen weiteren Längsschnitt durch die Vorrichtung gemäss Fig. 3 in einer Schnittebene, die normal zur Schnittebene der Fig. 3 angeordnet ist. Die Hohlstrukturen (5, 105, 205, 305, 405, 505, 605, 705) sind in diesem Beispiel wiederum als Bündel von Hohlkörpern, insbesondere Rohren mit kreisförmigen Querschnitten ausgebildet. Jede der genannten Hohlstrukturen weist einen Strömungsquerschnitt mit einer ersten Breite B1 und einer zweiten Breite B2 auf, wobei B1/B2 grösser als 1 ist und B1 normal zu einer Ebene gerichtet ist, welche die Längsachse 3 des Gehäuses oder eine zu dieser Längsachse 3 parallele Linie und eine Achse der Hohlstruktur enthält (5, 105). Hierbei ist mit der Breite B1 die Breite eines zu einer Hohlstruktur gehörigen Bündels von Hohlkörpern gemeint. In diesem speziellen Fall beträgt das Verhältnis von B1/B2 für die Hohlstrukturen (105, 205, 305, 405, 505, 605) genau 3. In den am Rand befindlichen Hohlstrukturen beträgt das Verhältnis B1/B2 genau 2. In Fig. 4 ist weiterhin ersichtlich, dass eine Mehrzahl von Hohlstrukturen (5, 105, 205, 305, 405, 505,605, 705) vorgesehen sein kann. Für die Mischwirkung hat es sich als optimal erwiesen, wenn zwischen 4 und 12 Hohlstrukturen verwendet werden. Zumindest ein Teil der Hohlstrukturen kann auch gemäss des Ausführungsbeispiels nach Fig. 2 ausgestaltet sein. Alle Hohlstrukturen sind, in einem in dieser Figur nicht dargestellten Gehäuse angeordnet. Bevorzugt hat das Gehäuse einen kreisförmigen Querschnitt, insbesondere, wenn das zweite Fluid 7 unter hohem Druck durch die Vorrichtung gefördert werden muss. Um den zur Verfügung stehenden Mischraum optimal auszunutzen, sind die Hohlstrukturen bevorzugt in einem einhüllenden Zylinder mit dem Durchmesser D1 angeordnet. Anstatt eines kreisförmigen können auch quadratische oder rechteckige Gehäuseformen vorgesehen sein, insbesondere, wenn der Innendruck sich nicht wesentlich vom Umgebungsdruck unterscheidet. Das Verhältnis der Breite B1 zum Durchmesser D1 der Gesamtheit der Hohlstrukturen gemäss Fig. 4 beträgt demzufolge 1/12 bis 1/4. Hierbei sind Abstände oder Leitelemente 75 nicht berücksichtigt. Der Durchmesser D1 soll sich möglichst wenig vom Innendurchmesser des Gehäuses unterscheiden, um Randeffekte zu vermeiden, welche sich nachteilig auf die Homogenität der Mischung auswirken. Zur Vermeidung von Randeffekten können auch sektorartige Leitelemente 75 an die am Rand gelegenen Hohlkörper angebracht werden, wodurch gewährleistet ist, dass auch Randströmungen erfasst und umgelenkt werden.

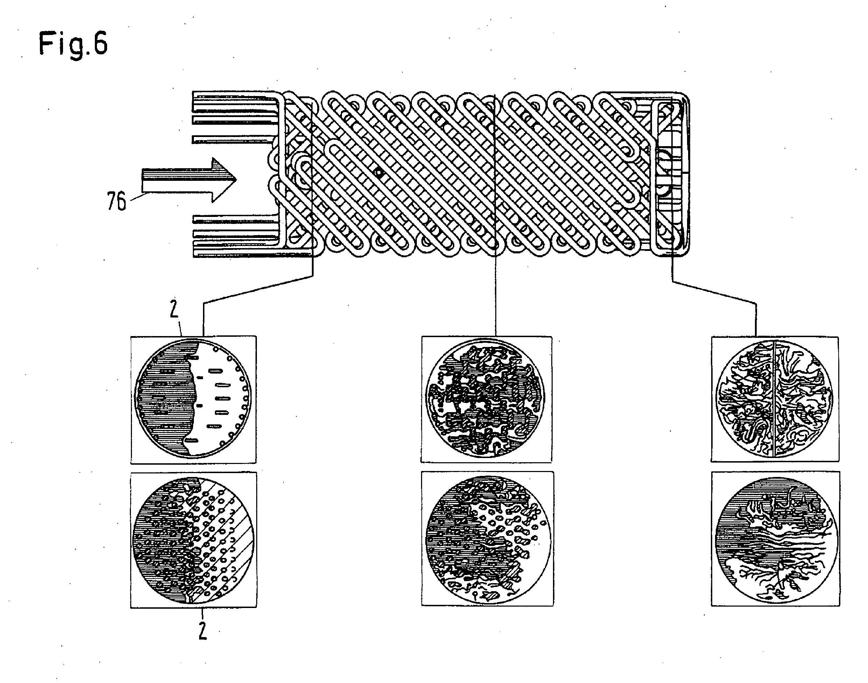

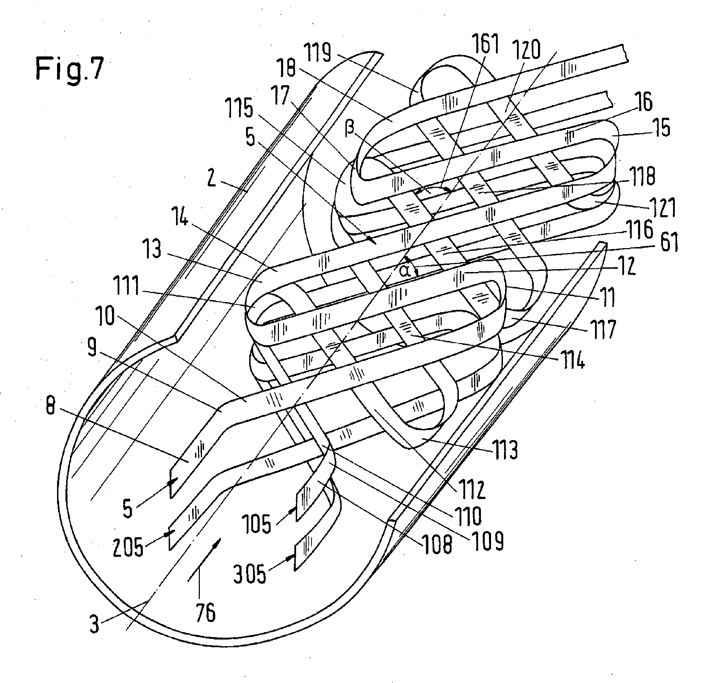

Die Vorrichtung gemäss Fig. 1, 3 oder 4 besteht aus einem rohrartigen Gehäuse mit darin angeordneten Hohlstrukturen, die von Rohrschlaufen ausgebildet werden. Zur Vereinfachung der Darstellung werden in Fig. 7 die Hohlstrukturen als Bänder dargestellt. Die Breite der Bänder entspricht dem vorhin definierten Wert B1. Durch die in der Folge genauer zu beschreibende Umlenkung der Strömung des zweiten Fluids 7 wird durch die Ausbildung der Bänder eine optimale Homogenität in Bezug auf Mischgüte und Wärmeaustausch über den ganzen Querschnitt des oben beschriebenen einhüllenden Zylinders erreicht. Somit ist ein ausgeprägtes Pfropfenströmungsverhalten des durch das Gehäuse strömenden zweiten Fluids 7 zu beobachten, was mit der in Fig. 6 dargestellten Versuchsreihe veranschaulicht wird. Die erfindungsgemässe Vorrichtung mit Pfropfenströmungsverhalten eignet sich besonders für hochviskose Newton'sche und nicht Newton'sche Flüssigkeiten, die unter anderem auch zu den in der Literatur als Channeling und Maldistribution bekannten Effekten neigen und/oder für Reaktionen mit grosser Wärmeerzeugung oder unter grossem Wärmeverbrauch ein verweilzeitkritisches Verhalten aufweisen. Die Mischwirkung und somit die Wärmeübertragungsleistung besitzt bei einer Anordnung von 4-12 Hohlstrukturen insbesondere für die vorhin genannten Typen von Fluiden ein Optimum.

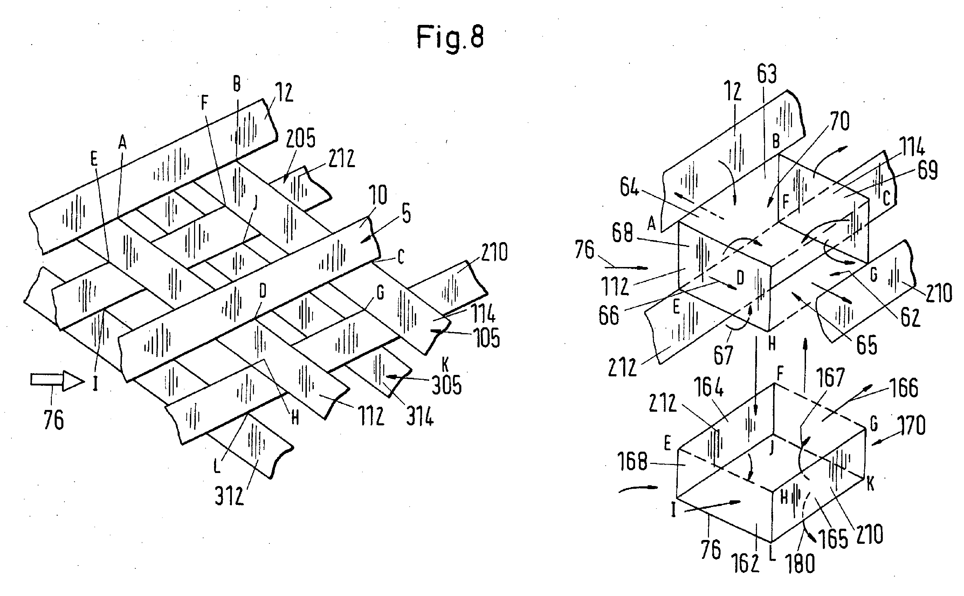

Fig. 5 zeigt einen Schnitt durch die Vorrichtung nach Fig. 3, der in einer Ebene normal zur Längsachse der Vorrichtung angeordnet ist. In Fig. 5 wird insbesondere gezeigt, dass mehr als zwei Abschnitte (424, 426, 428, 430, 432, 434, 436) einer ersten Hohlstruktur 405 von einer solchen Schnittebene geschnitten werden. Ein derartiges Teilelement 477 der Hohlstruktur 405 wird beispielsweise durch die Abschnitte 432 und 434 der Hohlstruktur seitlich begrenzt. Das zweite Fluid durchströmt dieses Teilelement 477, sowie die benachbarten Teilelemente in derselben Hohlstruktur 405 sowie gleichartige Teilelemente (77, 177, 277, 377, 577, 677, 777) der benachbarten Hohlstrukturen (5, 105, 205, 305, 505, 605, 705). Die Ansicht des Teilelements 477 entspricht dabei der Projektion von zwei Seitenflächen des in Fig. 8 dargestellten prismatischen Körpers. Wenn die Seitenflächen um die Winkel alpha und beta gleichen Betrags, aber umgekehrten Vorzeichens zur Hauptströmungsrichtung 76 (Fig. 8) des zweiten Fluids geneigt sind, enthält diese Projektionsfläche eine Diagonale des prismatischen Körpers. Durch jedes der Teilelemente 477 strömt somit anteilig das zweite Fluid 7.

Teilelemente 477, deren Seitenkanten von Hohlkörpern der Hohlstruktur 405 gebildet werden, sind in dem in Fig. 5 dargestellten Schnitt versetzt zu den Teilelementen 377 oder 577 angeordnet. Auch in diesem Fall liegen mehr als zwei Abschnitte (424, 426, 428, 430, 432, 434, 436) der Hohlstruktur 405 sowie der anderen gezeigten Hohlstrukturen (5, 105, 205, 405, 505, 605,705) in der Schnittebene. Die Randelemente (77, 777) in den zuoberst und zuunterst in der Fig. 5 dargestellten Randbereichen haben in diesem Ausführungsbeispiel eine kleinere Fläche als die Teilelemente (177, 277, 377, 477, 577, 677). Der Randbereich enthält ein sektorartiges Leitelement 75, um zu verhindern, dass ein wesentlicher Teil des zweiten Fluids 7 nicht an der Vermischung teilnimmt, sondern entlang des ansonsten offenen Randbereichs im Wesentlichen entlang der Innenwand des Gehäuses strömt. Derartiges Strömungsverhalten kann gemäss Fig. 6 auch bei Wärmetausch-Reaktoren nach dem Stand der Technik auftreten. Die Mischung ist nicht genügend homogen und auch der Wärmetausch ist nicht in ausreichendem Mass gewährleistet.

Fig. 6 zeigt eine Darstellung der fortschreitenden Vermischung eines aus zwei Komponenten bestehenden zweiten Fluids entlang der Längsachse der Vorrichtung. Das zweite Fluid 7 kann auch aus mehr als zwei Komponenten bestehen. Im oberen Teil ist eine Vorrichtung 1 gemäss des in Fig. 4 dargestellten Ausführungsbeispiels gezeigt. Darunter sind zwei Reihen von Schnitten angeordnet, die an den mit Verbindungslinien bezeichneten Stellen der Vorrichtung vorgenommen worden sind. Die obere Reihe von Schnitten zeigt den Fortschritt der Vermischung eines aus zwei Komponenten bestehenden zweiten Fluids 7, welche unterschiedliche Färbung aufweisen. Die untere Reihe zeigt die Vermischung der zwei Komponenten in einer Vorrichtung nach dem Stand der Technik. Aus dieser Darstellung wird besonders deutlich, dass mittels der Vorrichtung, eine Durchmischung der Komponenten nach ungefähr dem halben Mischungsweg vorliegt und in der zweiten Hälfte des Mischungswegs eine fortschreitende Homogenisierung der Mischung erfolgt, sodass die in der ersten Hälfte des Mischungswegs auftretende Strähnenbildung weitgehend verschwindet. Nach einem Mischungsweg, der zumindest ungefähr den 2,5 fachen Wert des Durchmessers D1 der Vorrichtung beträgt, liegt eine im Wesentlichen homogene Mischung vor. Gemäss der Vorrichtung nach dem Stand der Technik, welche keine Hohlstrukturen mit einem Verhältnis von B1 zu B2 grösser eins umfasst, sondern Rohre, die kreuzweise zueinander angeordnet sind, erfolgt entlang desselben Mischungswegs keine wesentliche Vermischung der beiden Komponenten, sondern allein eine gewisse Umlagerung um einen Winkel zwischen 45 und 90°. Selbst im Austrittsbereich gibt es einen grossen Bereich, der von der schwarz eingefärbten Komponente dominiert wird, sowie einen Bereich, der von der weiss eingefärbten Komponente dominiert wird. Fig. 6 zeigt somit deutlich den überraschenden Effekt, der mit der erfindungsgemässen Vorrichtung erzielt wird.

Fig. 7 zeigt eine schematische Ansicht der Vorrichtung zur Erläuterung der Mischwirkung der Einbauten. Das Strömungsverhalten des zweiten Fluids 7 um die Hohlstrukturen ist vergleichbar mit dem Strömungsverhalten um ein Band, wie es in Fig. 7 gezeigt wird. Das zweite Fluid 7 durchströmt einen Eintrittsquerschnitt des Gehäuses 2 entlang einer Hauptströmungsrichtung 76, die im Wesentlichen entlang der Längsachse 3 des Gehäuses 2 liegt. Trifft das zweite Fluid 7 auf eine Hohlstruktur (5, 105, 205, 305), wird die Strömung abgelenkt und es erfolgt gleichzeitig ein Wärmeübergang, wobei das zweite Fluid 7 entweder erwärmt oder gekühlt wird. Das zweite Fluid 7 trifft somit auf die Oberfläche der Hohlstruktur (5, 105, 205, 305) mit der Breite B1 auf. In der Fig. 7 ist nur ein Ausschnitt aus einer derartigen Anordnung von Hohlstrukturen gezeigt, zur Vereinfachung der Darstellung und zur Erhöhung der Übersicht sind nur vier benachbarte Hohlstrukturen (5, 105, 205, 305) gezeigt. Die erste Hohlstruktur 5 umfasst eine Mehrzahl von Abschnitten (10, 12, 14, 16, 18), die in einem Winkel alpha 61 zur Längsachse 3 angeordnet sind, und eine Mehrzahl von Verbindungselementen (9, 11, 13, 15, 17), die zwischen den Abschnitten (8, 10, 12, 14, 16, 18) angeordnet sind. Die zweiten Hohlstrukturen (105,305) umfassen eine Mehrzahl von Abschnitten (110, 112, 114, 116, 118, 120), die in einem Winkel beta 161 zur Längsachse 3 angeordnet sind und eine Mehrzahl von Verbindungselementen (109, 111, 113, 115, 117, 119, 121), die zwischen den Abschnitten (108, 110, 112, 114, 116, 118, 120) angeordnet sind. Die Hohlstruktur 205 hat den gleichen Aufbau wie die Hohlstruktur 5 und die Hohlstruktur 305 hat den gleichen Aufbau wie die Hohlstruktur 105, sodass diese beiden Hohlstrukturen nicht mehr im Detail beschrieben werden.

Fig. 8 zeigt einen Ausschnitt aus vier Hohlstrukturen (5, 105, 205, 305) der Figuren 1, 7, 11 und 12, sowie eine Darstellung eines Fluidvolumens zur Erläuterung der Strömung des zweiten Fluids 7. Die Hauptströmungsrichtung 76 des zweiten Fluids 7 ist schematisch durch einen Pfeil angedeutet. Ein Teil des Abschnitts 10 und des Abschnitts 12 der Hohlstruktur 5, sowie ein Teil des Abschnitts 112 und des Abschnitts 114 der Hohlstruktur 105 sind kreuzweise zueinander angeordnet. Ein Teil des Abschnitts 210 und des Abschnitts 212 der Hohlstruktur 205, sowie ein Teil des Abschnitts 312 und des Abschnitts 314 der Hohlstruktur 305 sind kreuzweise zueinander angeordnet. Die Kreuzungspunkte der Abschnitte (10, 12, 112, 114, 210, 212) werden mit A, B, C, D, E, F, G, H bezeichnet. Stellt man die Abschnitte vereinfacht als flache, sehr dünne Bänder dar (d.h. B2 geht gegen null), so wird durch die Kreuzungspunkte A, B, C, D, E, F, G, H ein Fluidvolumen 70 eingeschlossen, welches als Prisma, insbesondere als Quader, ausgebildet ist, welches die Eckpunkte A, B, C, D, E, F, G, H aufweist, wie im rechten Teil der Fig. 8 dargestellt ist. Das Fluidvolumen 70 weist eine erste Oberfläche 68 auf, die von den Eckpunkten A, D, H, E begrenzt wird und die von einem Teil eines zweiten Abschnitts 112 der zweiten Hohlstruktur 105 gebildet wird. Das Fluidvolumen 70 weist eine zweite Oberfläche 69 auf, die von den Eckpunkten B, C, G, F begrenzt wird und die von einem Teil des Abschnitts 114 der Hohlstruktur 105 gebildet wird. Die Hohlstrukturen (5,105) weisen somit eine erste Seitenfläche 68 auf, auf welche das zweite Fluid 7 auftrifft und entlang derer ein erster Teilstrom 66 geführt wird. Ein zweiter Teilstrom 67 verlässt die Seitenfläche 68 und wird in das Fluidvolumen 70, ins darunterliegende Fluidvolumen 170 oder ins darüberliegende Fluidvolumen geleitet. Das Fluidvolumen 70 umfasst eine Grundfläche 62, mit den Eckpunkten E, F, G, H und eine Deckfläche 63 mit den Eckpunkten A, B, C, D, sowie eine dritte Seitenfläche 64 mit den Eckpunkten A, B, E, F und eine vierte Seitenfläche 65 mit den Eckpunkten C, D, G, H, wobei die Seitenflächen 64 und 65 offen sind und die erste Seitenfläche 68 aus dem Abschnitt 112 und die zweite Seitenfläche 69 aus dem Abschnitt 114 gebildet werden. Die Grundfläche 62, Deckfläche 63 und die dritte und vierte Seitenfläche (64, 65) sind somit vom zweiten Fluid 7 durchströmbar, sodass eine kontinuierliche Teilung und Vereinigung von Teilströmen erfolgt, wodurch eine Umlagerung und Durchmischung des zweiten Fluids 7 erfolgt. Ein an das Fluidvolumen 70 anschliessendes Fluidvolumen 170 ist im rechten Teil der Fig. 8 versetzt bezüglich seiner Position in der Vorrichtung gezeichnet, um die Darstellung übersichtlicher zu gestalten. Das Fluidvolumen 170 liegt genau unter dem Fluidvolumen 70. Das Fluidvolumen 170 ist ebenfalls als viereckiges Prisma ausgebildet und wird von den Eckpunkten E, F, G, H, I, J, K, L begrenzt. Das Fluidvolumen 70 und das Fluidvolumen 170 haben eine gemeinsame Grundfläche bzw. Deckfläche 62, die von den Eckpunkten E, F, G, H aufgespannt wird. Die Seitenfläche 164 mit den Eckpunkten E, F, 1, J wird vom Abschnitt 212 gebildet und die Seitenfläche 165 mit den Eckpunkten G, H, K, L wird vom Abschnitt 210 der Hohlstruktur 205 gebildet. Das zweite Fluid 7 tritt über die offene Seitenfläche 168 mit den Eckpunkten E, H, I, L ein, ein erster Teilstrom 166 wird um den Winkel alpha 61, den der Abschnitt 210 mit der in Richtung der (in Fig. 7 dargestellten) Längsachse 3 verlaufenden Hauptströmungsrichtung 76 des zweiten Fluids 7 einschliesst, abgelenkt. Ein weiterer Teilstrom 167 tritt durch die Deckfläche 62 mit den Eckpunkten E, F, G, H und ein weiterer Teilstrom 180 die Grundfläche 162 mit den Eckpunkten I, J, K, L des Fluidvolumens 170 aus. Über diese Deckfläche bzw. Grundfläche 62 erfolgt somit gleichzeitig ein Eintritt und Austritt von Teilströmen (67, 167), sodass eine Durchmischung des zweiten Fluids 7 erfolgt.

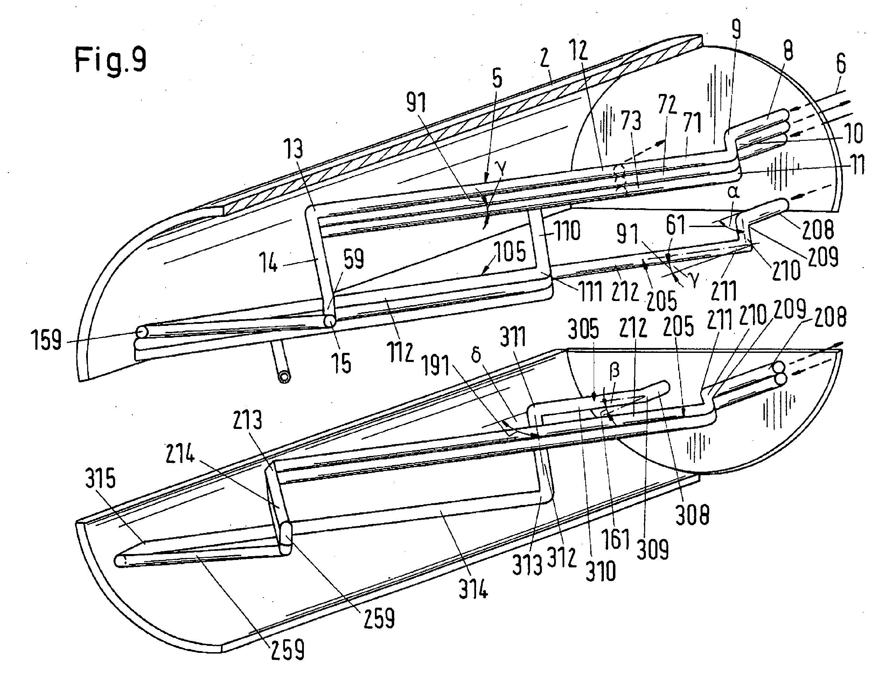

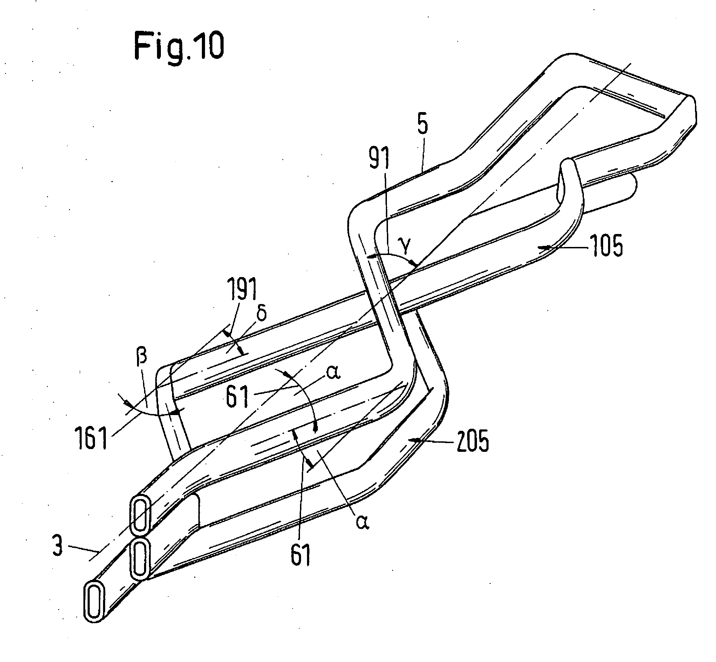

In Fig. 9 ist ein weiteres Ausführungsbeispiel einer Vorrichtung zur wärmetauschenden und mischenden Behandlung von fluiden Medien gezeigt. In der Darstellung der Fig. 9 ist das Gehäuse 2 aufgeschnitten und ein unterer Teil der Einbauten in der Vertikalrichtung versetzt gezeichnet dargestellt, sodass die als erste und zweite Hohlstrukturen (5, 105, 205, 305) ausgebildeten Einbauten 4 zumindest teilweise sichtbar gemacht werden. Zur Vereinfachung wurde auf die Darstellung eines Teils der Einbauten verzichtet. Die Verbindungselemente (11, 13, 15, 111, 211, 213, 311, 313) sind v-förmig ausgestaltet. Auch gemäss dieses Ausführungsbeispiels ist es möglich, das erste Fluid 6, welches innerhalb der Hohlstrukturen (5, 105, 205, 305) strömt, innerhalb eines Teils der Hohlkörper (71, 72, 73) in entgegengesetzter Richtung zu führen. Alternativ dazu kann der Eintritt des ersten Fluids 6 in die Hohlkörper an einem ersten Ende des Gehäuses erfolgen und der Austritt an einem zweiten, gegenüberliegenden Ende des Gehäuses erfolgen, was in der Figur nicht dargestellt ist. Zwischen der Längsachse 3 des Gehäuses 2 und den Schenkeln der v-förmigen Abschnitte, welche durch die Abschnitte (10, 12, 14, 210, 212, 214) der ersten Hohlstrukturen (5, 205) gebildet werden, wird abwechselnd der Winkel alpha 61 und der Winkel gamma 91 aufgespannt. Zwischen der Längsachse 3 des Gehäuses 2 und den Schenkeln der v-förmigen Abschnitte, welche durch die Abschnitte (110, 112, 310, 312, 314) der zweiten Hohlstrukturen (105, 305) gebildet werden, wird abwechselnd der Winkel beta 161 und der Winkel delta 191 aufgespannt. Zwar werden von den Abschnitten derselben Hohlstruktur nun abwechselnd die Winkel alpha und gamma oder beta und delta mit einer Parallelen zur Längsachse aufgespannt, dennoch ist das in Fig. 7 und 8 dargestellte Modell der Fluidströmung für das zweite Fluid 7 in gleicher Weise für dieses Ausführungsbeispiel und die nachfolgend zu beschreibende Variante gemäss Fig. 10 anzuwenden. Eine weitere Möglichkeit besteht darin, den Austritt des ersten Fluids 6 in eine Sammeleinheit oder Kollektor vorzusehen. In dieser Sammeleinheit werden zumindest Teilströme des ersten Fluids 6 zusammengeführt und anschliessend neu auf die ersten und zweiten Hohlstrukturen (5, 105, 205, 305) verteilt, was in der Fig. nicht dargestellt ist.

Fig. 10 zeigt eine Ansicht einer Variante des Ausführungsbeispiels gemäss Fig. 9, wobei Hohlstrukturen nach Fig. 2 verwendet werden. Das in Fig. 7 und 8 dargestellte Mischprinzip wird auch für v-förmige Abschnitte mit Schenkeln, die in unterschiedlichen Winkeln alpha 61 und gamma 91, sowie beta 161 und delta 191 zur Längsachse 3 angeordnet sind, verwirklicht.

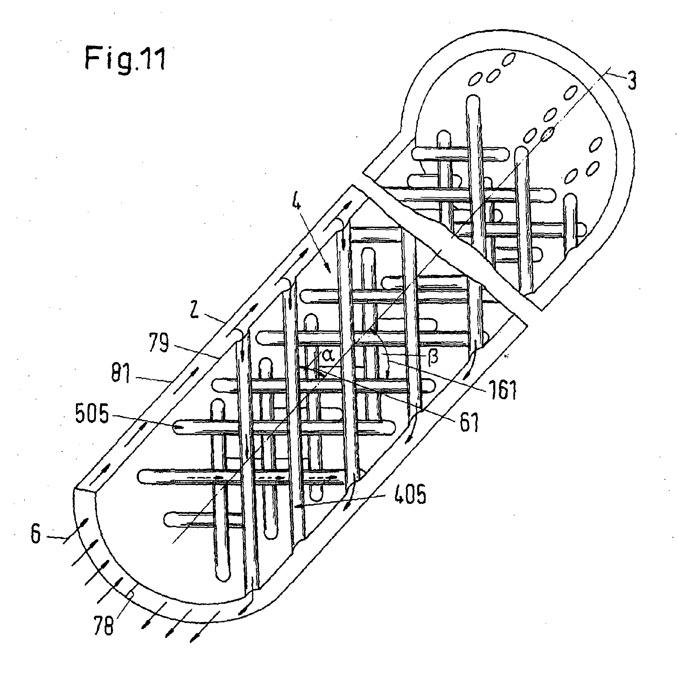

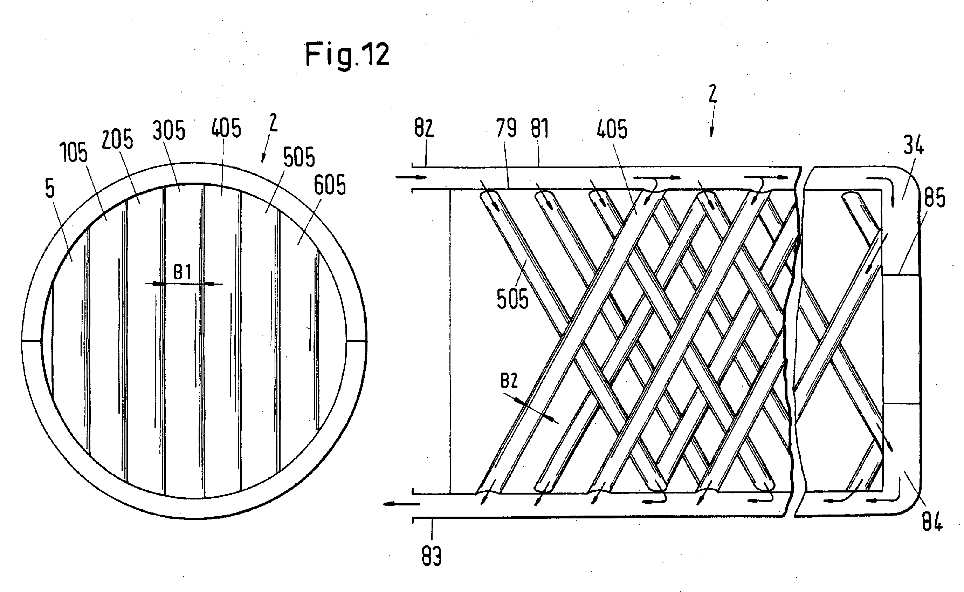

Fig. 11 zeigt eine Ansicht einer Vorrichtung zur wärmetauschenden und mischenden Behandlung von fluiden Medien gemäss einem dritten Ausführungsbeispiels, nach welchem die ersten Hohlstrukturen (5, 205, 405, 605) und zweiten Hohlstrukturen (105, 305, 505) kreuzweise zueinander angeordnet sind. Zur Bezeichnung der Hohlstrukturen siehe Fig. 12, linker Teil. Das Gehäuse 2 ist als Doppelmantel ausgeführt, innerhalb dessen das erste Fluid 6 strömt. Zwischen den beiden Wandkörpern (79, 81) des Doppelmantels ist ein Trennelement 78 angeordnet, mittels welchem Bereiche entgegen gesetzter Strömungsrichtung im Inneren des Doppelmantels voneinander trennbar sind. In Fig. 11 ist der Doppelmantel aufgeschnitten dargestellt, und zwar in einer Ebene, welche die Längsachse 3 der Wandkörper (79, 81) des Doppelmantels enthält. Die Wandkörper (79, 81) sind in diesem Ausführungsbeispiel als konzentrische Zylinder ausgebildet. Am inneren Wandkörper 79 sind eine Mehrzahl von ersten und zweiten Hohlstrukturen (405, 505) angebracht, welche von einem zweiten Fluid 7 umströmbar sind. Die Hauptströmungsrichtung des Fluids 7 liegt in Richtung der Längsachse 3. Da das Fluid 7 auf die sich im Inneren des Wandkörpers 79 erstreckenden Hohlstrukturen (5, 105, 205, 305, 405, 505, 605) auftrifft, wird es durch diese Einbauten 4, also die Gesamtheit der ersten und zweiten Hohlstrukturen (5, 105, 205, 305, 405, 505, 605) abgelenkt. Die ersten Hohlstrukturen (5, 205, 405, 605) und die zweiten Hohlstrukturen (105, 305, 505) können jeweils aus mehreren Hohlkörpern aufgebaut sein, wie in Fig. 1, 3, 4, 5, 9 dargestellt ist. Die ersten Hohlstrukturen (5, 205, 405, 605) schliessen mit der Längsachse einen Winkel alpha 61 ein, die zweiten Hohlstrukturen (105, 305, 505) schliessen mit der Längsachse einen Winkel beta 161 ein. Die Winkel alpha 61 und beta 161 können nach einer bevorzugten Variante denselben Betrag, aber umgekehrtes Vorzeichen aufweisen. Das erste Fluid 6 strömt hier nicht über einen Boden 60, wie in Fig. 1 gezeigt wurde, in die Hohlstrukturen ein, sondern über die Innenwand des inneren Wandkörpers 79. Die Darstellung gemäss Fig. 8 sowie der Inhalt der zugehörigen Beschreibung können auch auf dieses Ausführungsbeispiel angewendet werden, weil eine kreuzweise Anordnung benachbarter Hohlstrukturen vorliegt.

Fig. 12 zeigt zwei Schnitte durch eine Vorrichtung gemäss dem in Fig. 11 gezeigten Ausführungsbeispiels. Der linke Teil der Fig. 12 zeigt einen Radialschnitt durch das Gehäuse 2. Der innere Wandkörper 79 und der äussere Wandkörper 81 sind aufgeschnitten dargestellt. Die Stutzen (82, 83) zur Einleitung und zum Ablassen des ersten Fluids sind in diesem Schnitt nicht mehr sichtbar. Zwei Trennelemente 78 sind zwischen dem inneren Wandkörper 79 und dem äusseren Wandkörper 81 angeordnet.

Der rechte Teil der Fig. 12 zeigt einen Längsschnitt durch das Gehäuse 2 und verdeutlicht die Strömungsrichtungen des ersten Fluids 6. Das erste Fluid 6, welches über den Eintrittsstutzen 82 in den Zwischenraum zwischen innerem Wandkörper 79 und äusserem Wandkörper 81 eintritt, fliesst durch diesen Zwischenraum und tritt in das Innere der kreuzweise angeordneten ersten und zweiten Hohlstrukturen (5, 105, 205, 305, 405, 505, 605) ein. Die Hohlstrukturen werden kreuzweise vom ersten Fluid 6 durchströmt und die Teilströme in der unteren Hälfte des Gehäuses 2 in dem vom inneren Wandkörper 79 und äusserem Wandkörper 81 begrenzten Zwischenraum eingeleitet und durch den Austrittsstutzen 83 abgelassen. Das zweite Fluid 7 strömt innerhalb des inneren Wandkörpers 79 und wird von den Hohlstrukturen (5, 105, 205, 305, 405, 505, 605) abgelenkt. Gleichzeitig erfolgt ein Wärmetausch entlang der Hohlstrukturen, sowie auch über die Oberfläche des inneren Wandkörpers 79. Ein Sammelelement ist hier nur dann sinnvoll, wenn vermieden werden kann, dass ein wesentlicher Teil des ersten Fluids 6 einen Bypass bildet und, ohne durch die Hohlstrukturen (5, 105, 205, 305, 405, 505, 605) zu fliessen, wieder aus der Vorrichtung ausströmt. Das Sammelelement 84 ist an einem zweiten Ende des Gehäuses 2 angebracht. In das Sammelelement 84 mündet ein Teil der Hohlstrukturen, sodass das erste Fluid 6 nach Durchströmen der Hohlstrukturen in dem Sammelelement 84 aufgenommen wird. Ein Teil der Hohlstrukturen ist vom Sammelelement ausgehend mit erstem Fluid beschickbar, sodass dem Sammelelement zumindest abschnittsweise die Funktion eines Verteilelements zukommt. Das Sammelelement weist ein Sperrelement 85 auf, das verhindert, dass das erste Fluid 6 einen Bypass bildet, ohne durch die Hohlstrukturen zu fliessen. Das Sperrelement 85 kann auch ringförmig ausgestaltet sein und einen Kanal zum Eintritt des zweiten Fluids 7 aufweisen, welches somit im Gegenstrom zum im Doppelmantel geführten ersten Fluid 6 oder im Kreuzstrom zum in den Hohlstrukturen geführten ersten Fluid 6 fliesst.

Tritt das zweite Fluid 7 hingegen durch einen in dem Sperrelement angeordneten Kanal aus, erfolgt die Strömung des ersten Fluids 6 und des zweiten Fluids 7 im Gleichstrom zueinander, wenn man die Strömung im Doppelmantel betrachtet, und im Kreuzstrom zueinander, wenn man die Strömung des ersten Fluids durch die Hohlstrukturen betrachtet. Das Verhältnis von B1/B2 ist in Fig. 12 grösser als eins. Hierdurch kann die Durchmischung und der Wärmeaustausch des zweiten Fluids 7 überraschend verbessert werden.

## Patentansprüche

1. Vorrichtung zur wärmetauschenden und mischenden Behandlung von fluiden Medien, umfassend ein Gehäuse (2), welches eine Längsachse (3) aufweist, mit darin angeordneten Einbauten (4), wobei die Einbauten (4) eine erste Hohlstruktur (5) und eine zweite Hohlstruktur (105) umfassen und die erste Hohlstruktur (5) und die zweite Hohlstruktur (105) von einem ersten Fluid (6) durchströmbar und von einem zweiten Fluid (7) umströmbar sind, wobei die erste Hohlstruktur (5) und die zweite Hohlstruktur (105) kreuzweise zueinander angeordnet sind, **dadurch gekennzeichnet, dass** die Hohlstrukturen (5, 105) einen Strömungsquerschnitt mit einer ersten Breite B1 und einer zweiten Breite B2 aufweisen, wobei B1/B2 grösser eins ist und B1 normal zu einer Ebene gerichtet ist, welche die Längsachse (3) des Gehäuses oder eine zu dieser Längsachse (3) parallele Linie und eine Achse der Hohlstruktur (5, 105) enthält.

2. Vorrichtung nach Anspruch 1, wobei das zweite Fluid (7) einen Eintrittsquerschnitt des Gehäuses (2) entlang einer Hauptströmungsrichtung (76) durchströmt, die im Wesentlichen entlang der Längsachse (3) des Gehäuses liegt.

3. Vorrichtung nach Ansprüchen 1 oder 2, wobei die Einbauten (4) aus minimal 4 und maximal 12 Hohlstrukturen (5, 105) gebildet werden.

4. Vorrichtung nach einem der vorhergehenden Ansprüche, wobei die Hohlstrukturen (5, 105) eine Mehrzahl von Verbindungselementen (9, 11, 13, 15, 17, 19 bis 51, 109, 111, 113, 115, 117, 119 bis 151) umfassen, durch welche eine Zwangsumlenkung des im Inneren der Hohlstrukturen (5, 105) strömenden ersten Fluids (6) bewirkt wird.

5. Vorrichtung nach Anspruch 4, wobei die erste Hohlstruktur (5) einen ersten Abschnitt (8) umfasst, der sich parallel zur Längsachse (3) erstreckt, und eine Mehrzahl von Verbindungselementen (9, 11, 13, 15, 17, 19 bis 51) aufweist, in welchen eine Zwangsumlenkung des im Inneren der ersten Hohlstruktur strömenden ersten Fluids (6) erfolgt, wobei zwischen einem ersten Verbindungselement und einem zweiten Verbindungselement ein zweiter Abschnitt angeordnet ist, in welchem die mittlere Strömungsrichtung des ersten Fluids (6) gegenüber der Längsachse (3) zumindest abschnittsweise in einem Winkel alpha (61) verläuft.

6. Vorrichtung nach Anspruch 5, wobei eine zweite Hohlstruktur (105) benachbart zur ersten Hohlstruktur (5) angeordnet ist, und die zweite Hohlstruktur (105) Abschnitte (108, 110, 112, 114, 116, 118 bis 152) umfasst, die durch Verbindungselemente (109, 111, 113, 115, 117, 119 bis 151) verbunden sind, wobei in den Abschnitten die mittlere Strömungsrichtung des ersten Fluids gegenüber der Längsachse (3) zumindest abschnittsweise unter einem Winkel beta (161) verläuft.

7. Vorrichtung nach Ansprüchen 5 oder 6, wobei sich die Winkel alpha (61) und beta (161) in ihrem Vorzeichen und/oder ihrem Betrag unterscheiden.

8. Vorrichtung nach Anspruch 7, wobei die Winkel alpha (61) und beta (161) im Wesentlichen gleich gross sind, aber entgegengesetzte Vorzeichen haben.

9. Vorrichtung nach einem der Ansprüche 5 bis 8, wobei zumindest ein Teil der Verbindungselemente im Wesentlichen halbkreisförmig ausgestaltet sind.

10. Vorrichtung nach einem der Ansprüche 5 bis 8, wobei zumindest ein Teil der Verbindungselemente v-förmig oder u-förmig ausgestaltet sind.

11. Vorrichtung nach einem der vorhergehenden Ansprüche, wobei die erste Hohlstruktur (5) einen oder eine Mehrzahl von ersten Hohlkörpern (71, 72, 73), sowie die zweite Hohlstruktur (105) einen oder eine Mehrzahl von zweiten Hohlkörpern (171, 172, 173) umfasst.

12. Vorrichtung nach Anspruch 11, wobei die ersten Hohlkörper (71, 72, 73) und/oder die zweiten Hohlkörper (171, 172, 173) als je ein Bündel von im Wesentlichen parallel verlaufenden Rohren ausgebildet sind.

13. Vorrichtung nach Anspruch 12, wobei die Hohlkörper (71, 72, 73) eines Bündels leicht versetzt zueinander stehen.

14. Vorrichtung nach Ansprüchen 12 oder 13, wobei zwischen den Hohlkörpern (71, 72, 73) eines Bündels ein definierter Spalt vorgesehen ist.

15. Vorrichtung nach einem der vorhergehenden Ansprüche, wobei Hohlstrukturen (105) eine erste Oberfläche (68) aufweisen, auf welche das zweite Fluid (7) auftrifft und entlang derer ein erster Teilstrom (66) geführt wird, sowie ein zweiter Teilstrom (67), der die Oberfläche (68) verlässt und in ein Fluidvolumen (70) geleitet wird, oder in das darüberliegende oder darunterliegende Fluidvolumen (170), wobei das Fluidvolumen (70) als prismatischer Körper ausgebildet ist, welcher 6 viereckige Flächen aufweist, die von den Rändern von 3 benachbarten Hohlstrukturen gebildet sind und von den Eckpunkten (A, B, C, D, E, F, G, H) begrenzt sind, sodass eine Grundfläche (62, E, F, G, H) und eine Deckfläche (63, A, B, C, D), sowie eine erste und eine zweite Seitenfläche (64, A, B, E, F und 65, C, D, G, H) offen sind und die übrigen Seitenflächen aus Teilen der ersten Oberfläche (68) und einer zweiten Oberfläche (69) gebildet werden, wobei die Grundfläche (62), Deckfläche (63) und die erste und zweite Seitenfläche (64, 65) vom zweiten Fluid (7) durchströmbar sind, sodass eine kontinuierliche Teilung und Vereinigung von Teilströmen erfolgt, wodurch eine Umlagerung und Durchmischung des zweiten Fluids (7) erfolgt.

16. Vorrichtung nach einem der vorhergehenden Ansprüche, wobei ein Sammelelement (84) an einem zweiten Ende des Gehäuses (2) angebracht ist, in welches zumindest ein Teil der Hohlstrukturen (5, 105) mündet.

17. Vorrichtung nach Anspruch 14, wobei ein Teil der Hohlstrukturen (5, 105) vom Sammelelement (84) ausgehend mit erstem Fluid (6) beschickbar ist.

18. Vorrichtung nach einem der vorhergehenden Ansprüche, wobei das erste und das zweite Fluid im Gegenstrom zueinander oder im Kreuz-Gegenstrom zueinander oder im Gleichstrom oder im Kreuz-Gleichstrom zueinander geführt werden.

19. Vorrichtung nach einem der vorhergehenden Ansprüche, wobei das zweite Fluid (7) Komponenten enthält, zwischen denen eine chemische Reaktion abläuft.

20. Vorrichtung nach einem der vorhergehenden Ansprüche, wobei zwischen zwei benachbarten Hohlstrukturen (5, 105) ein Abstand vorgesehen ist.

21. Verfahren zur wärmetauschenden und mischenden Behandlung von fluiden Medien, welches in einer Vorrichtung durchgeführt wird, die ein Gehäuse (2), mit darin angeordneten Einbauten (4) umfasst, wobei die Einbauten (4) eine erste Hohlstruktur (5) und eine zweite Hohlstruktur (105) ausbilden, wobei in einem ersten Schritt die erste Hohlstruktur (5) und die zweite Hohlstruktur (105) von einem ersten Fluid (6) durchströmt wird und von einem zweiten Fluid (7) umströmt wird, wobei die erste Hohlstruktur (5) und die zweite Hohlstruktur (105) kreuzweise zueinander angeordnet sind, **dadurch gekennzeichnet, dass** das zweite Fluid (7) durch die Hohlstrukturen umgelenkt wird, weil die Hohlstrukturen (5, 105) einen Strömungsquerschnitt mit einer ersten Breite B1 und einer zweiten Breite B2 aufweisen, wobei B1/B2 grösser eins ist und B1 normal zu einer Ebene gerichtet ist, welche die Längsachse (3) des Gehäuses oder eine zu dieser Längsachse (3) parallele Linie und eine Achse der Hohlstruktur (5, 105) enthält, sodass sich das Fluid (7) durchmischt, während es die Hohlstrukturen umströmt.

22. Verwendung der Vorrichtung nach einem der vorhergehenden Ansprüche zur zur wärmetauschenden und mischenden Behandlung von hochviskosen Fluiden, insbesondere Polymeren oder Nahrungsmitteln.

## Claims

1. An apparatus for the heat-exchanging and mixing treatment of fluid media, including a housing (2), with installations (4) arranged therein, with the installations (4) including a first hollow structure (5) and a second hollow structure (105) and a first fluid (6) being able to flow through the first hollow structure (5) and the second hollow structure (105) and a second fluid (7) being able to flow around the first hollow structure and the second hollow structure, with the first hollow structure (5) and the second hollow structure (105) being arranged cross-wise with respect to one another, **characterised in that** the hollow structures (5, 105) have a flow cross-section with a first width B1 and a second width B2, with B1/B2 being larger than one and B1 is oriented normally to a plane which contains the longitudinal axis (3) of the housing or a line parallel to said longitudinal axis and an axis of the hollow structure (5,105).

2. An apparatus in accordance with claim 1, wherein the second fluid (7) flows through an entry cross-section of the housing (2) along a main flow direction (76) which is substantially disposed along the longitudinal axis (3) of the housing.

3. An apparatus in accordance with claim 1 or claim 2, wherein the installations (4) are formed from a minimum of 4 and a maximum of 12 hollow structures (5, 105).

4. An apparatus in accordance with any one of the preceding claims, wherein the hollow structures (5, 105) include a plurality of connection members (9, 11, 13, 15, 17, 19 to 51, 109, 111, 113, 115, 117, 119 to 151) by which a compulsory deflection of the first fluid (6) flowing in the interior of the hollow structures (5, 105) is effected.

5. An apparatus in accordance with claim 4, wherein the first hollow structure (5) includes a first section (8) extending parallel to the longitudinal axis (3) and has a plurality of connection members (9, 11, 13, 15, 17, 19 to 51) into which a compulsory deflection of the first fluid (6) flowing in the interior of the first hollow structure takes place, with a second section being arranged between a first connection member and a second connection member, in which second section the middle flow direction of the first fluid (6) extends at least sectionally at an angle alpha (61) with respect to the longitudinal axis (3).

6. An apparatus in accordance with claim 5, wherein a second hollow structure (105) is arranged adjacent to the first hollow structure (5) and the second hollow structure (105) includes sections (108, 110, 112, 114, 116, 118 to 152) which are connected by connection members (109, 111, 113, 115, 117, 119 to 151), with the middle flow direction of the first fluid extending in the sections at least sectionally at an angle beta (161) with respect to the longitudinal axis (3).

7. An apparatus in accordance with claim 5 or claim 6, wherein the angles alpha (61) and beta (161) differ in their signs and/or in their magnitudes.

8. An apparatus in accordance with claim 7, wherein the angles alpha (61) and beta (161) are substantially equal, but have opposite signs.

9. An apparatus in accordance with any one of the claims 5 to 8, wherein at least some of the connection members are made substantially semicircular in shape.

10. An apparatus in accordance with any one of the claims 5 to 8, wherein at least some of the connection members are made in V shape or in U shape.

11. An apparatus in accordance with any one of the preceding claims, wherein the first hollow structure (5) includes one first hollow body or a plurality of first hollow bodies (71, 72, 73) and the second hollow structure (105) includes one second hollow body or a plurality of second hollow bodies (171, 172, 173).

12. An apparatus in accordance with claim 11, wherein the first hollow bodies (71, 72, 73) and/or the second hollow bodies (171, 172, 173) are made in each case as a bundle of tubes extending substantially in parallel.

13. An apparatus in accordance with claim 12, wherein the hollow bodies (71, 72, 73) of a bundle are slightly offset with respect to one another.

14. An apparatus in accordance with claim 12 or claim 13, wherein a defined gap is provided between the hollow bodies (71, 72, 73) of a bundle.

15. An apparatus in accordance with any one of the preceding claims, wherein hollow structures (105) have a first surface (68) onto which the second fluid (7) is incident and along which a first part flow (66) is guided as well as a second part flow (67) which leaves the surface (68) and is directed into a fluid volume (70), or into the fluid volume (170) disposed thereabove or thereunder, with the fluid volume (70) being made as a prismatic body which has 6 rectangular surfaces which are formed by the rims of 3 adjacent hollow structures and are bounded by the corner points (A, B, C, D, E, F, G, H) so that a base surface (62, E, F, G, H) and a top surface (63, A, B, C, D) as well as first and second side surfaces (64, A, B, E, F and 65, C, D, G, H) are open and the other side surfaces are formed from parts of the first surface (68) and a second surface (69), with second fluid (7) being able to flow through the base surface (62), the top surface (63) and the first and second side surfaces (64, 65) so that a continuous dividing and combining of part flows takes place, whereby a rearrangement and mixing of the second fluid (7) takes place.

16. An apparatus in accordance with any one of the preceding claims, wherein a collection element (84) is attached to a second end of the housing (2) into which at least some of the hollow structures (5, 105) open.

17. An apparatus in accordance with claim 14, wherein some of the hollow structures (5, 105) can be charged with first fluid (6) starting from the collection element (84).

18. An apparatus in accordance with any one of the preceding claims, wherein the first and second fluids are guided in counter flow with respect to one another or in cross-flow with respect to one another or in parallel flow or in cross-parallel flow with respect to one another.

19. An apparatus in accordance with any one of the preceding claims, wherein the second fluid (7) contains components between which a chemical reaction takes place.

20. An apparatus in accordance with any one of the preceding claims, wherein a spacing is provided between two adjacent hollow structures (5, 105).

21. A method for the heat exchanging and mixing treatment of fluid media, which is carried out in an apparatus which includes a housing (2), with installations (4) arranged therein, with the installations (4) forming a first hollow structure (5) and a second hollow structure (105), wherein, in a first step, a first fluid (6) flows through the first hollow structure (5) and the second hollow structure (105) and a second fluid (7) flows around the first hollow structure and the second hollow structure, with the first hollow structure (5) and the second hollow structure (105) being arranged cross-wise with respect to one another, **characterised in that** the second fluid (7) is deflected through the hollow structures because the hollow structures (5, 105) have a flow cross-section with a first width B1 and a second width B2, with B1/B2 being larger than one and B1 being oriented normally to a plane which contains the longitudinal axis (3) of the housing or a line parallel to said longitudinal axis and an axis of the hollow strucure (5,105), so that the fluid (7) is mixed while it flows around the hollow structure.

22. Use of an apparatus in accordance with any one of the preceding claims for the heat exchanging and mixing treatment of high viscosity fluids, in particular polymers or foodstuffs.

## Revendications

1. Dispositif pour le traitement de fluides par transfert thermique et mélange, comportant un carter (2), qui comporte un axe longitudinal (3) et dans lequel sont montés des inserts (4), lesdits inserts (4) comportant une première structure creuse (5) et une deuxième structure creuse (105), et la première structure creuse (5) et la deuxième structure creuse (105) pouvant être traversées par un premier fluide (6) et pouvant être contournées par un deuxième fluide (7), la première structure creuse (5) et la deuxième structure creuse (5) 105) étant disposées en croix l'une par rapport à l'autre, **caractérisé en ce que** les structures creuses possèdent une section de passage avec une première largeur B1 et une deuxième largeur B2, sachant que B1/B2 est supérieur à un et B1 est orientée verticalement à un plan qui contient l'axe longitudinal (3) du carter ou une ligne parallèle à cet axe longitudinal (3) et un axe de la structure creuse (5, 105).

2. Dispositif selon la revendication 1, dans lequel le deuxième fluide (7) circule à travers une section d'admission du carter (2) dans un sens d'écoulement principal (76), qui est orienté sensiblement le long de l'axe longitudinal (3) du carter.

3. Dispositif selon la revendication 1 ou 2, dans lequel les inserts (4) sont formés au minimum par 4 et au maximum par 12 structures creuses (5, 105).

4. Dispositif selon l'une quelconque des revendications précédentes, dans lequel les structures creuses (5, 105) comportent une pluralité d'éléments de liaison (9, 11, 13, 15, 17, 19 à 51, 109, 111, 113, 115, 117, 119 à 151), par lesquels se produit une déviation forcée du premier fluide (6) circulant à l'intérieur des structures creuses (5, 105).

5. Dispositif selon la revendication 4, dans lequel la première structure creuse (5) comporte un premier tronçon (8) qui est parallèle à l'axe longitudinal (3) et comporte une pluralité d'éléments de liaison (9, 11, 13, 15, 17, 19 à 51), dans lesquels se produit une déviation forcée du premier fluide (6) circulant à l'intérieur de la première structure creuse, sachant qu'entre un premier élément de liaison et un deuxième élément de liaison est agencé un deuxième tronçon, dans lequel le sens d'écoulement moyen du premier fluide (6) s'étend en formant, au moins par zones, un angle alpha (61) avec l'axe longitudinal (3).

6. Dispositif selon la revendication 5, dans lequel une deuxième structure creuse (105) est adjacente à la première structure creuse (5), et la deuxième structure creuse (105) comporte des tronçons (108, 110, 112, 114, 116, 118 à 152) qui sont reliés par des éléments de liaison (109, 111, 113, 115, 117, 119 à 151), le sens d'écoulement moyen du premier fluide dans lesdits tronçons s'étendant, au moins par zones, en formant un angle bêta (161) avec l'axe longitudinal (3).

7. Dispositif selon la revendication 5 ou 6, dans lequel les angles alpha (61) et bêta (161) se différencient par leur sens et/ou leur valeur.

8. Dispositif selon la revendication 7, dans lequel les angles alpha (61) et bêta (161) ont sensiblement la même valeur, mais ont des sens opposés.

9. Dispositif selon l'une quelconque des revendications 5 à 8, dans lequel au moins une partie des éléments de liaison est réalisée sensiblement en forme de demi-cercle.

10. Dispositif selon l'une quelconque des revendications 5 à 8, dans lequel au moins une partie des éléments de liaison est réalisée en forme de V ou en forme de U.

11. Dispositif selon l'une quelconque des revendications précédentes, dans lequel la première structure creuse (5) comporte un ou une pluralité de premiers corps creux (71, 72, 73), et la deuxième structure creuse (105) comporte un ou une pluralité de deuxièmes corps creux (171, 172, 173).

12. Dispositif selon la revendication 11, dans lequel les premiers corps creux (71, 72, 73) et/ou les deuxièmes corps creux (171, 172, 173) sont réalisés sous la forme d'un faisceau de tubes sensiblement parallèles entre eux.

13. Dispositif selon la revendication 12, dans lequel les corps creux (71, 72, 73) d'un faisceau sont légèrement décalés entre eux.

14. Dispositif selon la revendication 12 ou 13, dans lequel une fente définie est prévue entre les corps creux (71, 72, 73) d'un faisceau.

15. Dispositif selon l'une quelconque des revendications précédentes, dans lequel les structures creuses (105) comportent une première surface (68), sur laquelle parvient le deuxième fluide (7) et le long de laquelle est guidé un premier flux partiel (66), ainsi qu'un deuxième flux partiel (67) qui quitte la surface (68) et est guidé dans un volume de fluide (70), ou dans le volume de fluide (170) situé au-dessus ou au-dessous, le volume de fluide (70) étant réalisé sous la forme d'un corps prismatique, qui comporte six faces rectangulaires, qui sont formées par les bords de trois structures creuses adjacentes et qui sont limitées par les coins (A, B, C, D, E, F, G), de telle sorte qu'un fond (62, E, F, G, H) et une face supérieure (63, A, B, C, D), ainsi qu'une première et une deuxième face latérale (64, A, B, E, F et 65, C, D, G, H) sont ouvertes et les autres faces latérales sont formées par des parties de la première surface (68) et d'une deuxième surface (69), sachant que le fond (62), la face supérieure (63) et la première et la deuxième face latérale (64, 65) peuvent être traversés par le deuxième fluide (7), de telle sorte qu'il se produit un partage et une réunion continus des flux partiels, ce qui entraîne une transposition et un mélange intime du deuxième fluide (7).

16. Dispositif selon l'une quelconque des revendications précédentes, dans lequel un élément collecteur (84) est monté sur une deuxième extrémité du carter (2), dans laquelle débouche au moins une partie des structures creuses (5, 105).

17. Dispositif selon la revendication 14, dans lequel une partie des structures creuses (5, 105) peuvent être alimentées avec un premier fluide (6) à partir de l'élément collecteur (84).

18. Dispositif selon l'une quelconque des revendications précédentes, dans lequel le premier et le deuxième fluide sont guidés l'un par rapport à l'autre en contre-courant ou en contre-courant croisé ou sont guidés l'un par rapport à l'autre en courant de même sens ou en courant croisé de même sens.

19. Dispositif selon l'une quelconque des revendications précédentes, dans lequel le deuxième fluide (7) contient des composants, entre lesquels se déroule une réaction.

20. Dispositif selon l'une quelconque des revendications précédentes, dans lequel une distance est prévue entre deux structures creuses (5, 105) adjacentes.

21. Procédé pour le traitement de fluides par transfert thermique et mélange, lequel est mis en oeuvre dans un dispositif qui comporte un carter (2), dans lequel sont montés des inserts (4), lesdits inserts (4) formant une première structure creuse (5) et une deuxième structure creuse (105), sachant que dans une première étape, la première structure creuse (5) et la deuxième structure creuse (105) sont traversées par un premier fluide (6) et sont contournées par un deuxième fluide (7), la première structure creuse (5) et la deuxième structure creuse (5) 105) étant disposées en croix l'une par rapport à l'autre, **caractérisé en ce que** le deuxième fluide (7) est dévié par les structures creuses, car les structures creuses possèdent une section de passage avec une première largeur B1 et une deuxième largeur B2, sachant que B1/B2 est supérieur à un et B1 est orientée verticalement à un plan qui contient l'axe longitudinal (3) du carter ou une ligne parallèle à cet axe longitudinal (3) et un axe de la structure creuse (5, 105), de telle sorte que le fluide (7) est intimement mélangé pendant qu'il contourne les structures creuses.

22. Utilisation du dispositif selon l'une quelconque des revendications précédentes, pour le traitement par transfert thermique et mélange de fluides à haute viscosité, en particulier des polymères ou des produits alimentaires.
